# FASCICULE DE BREVET EUROPEEN

(11) **EP 2 764 345 B1**
(45) Date de publication et mention de la délivrance du brevet: **10.03.2021**
(21) Numéro de dépôt: 12769432.1
(22) Date de dépôt: 05.10.2012
(51) Int. Cl.: G01N 1/22

(54) **DISPOSITIF DE PRÉLEVEMENT ET DE TRANSPORT DE NANO-OBJETS CONTENUS DANS DES AÉROSOLS EN VUE DE LEUR ANALYSE**
VORRICHTUNG ZUM ENTNEHMEN UND TRANSPORTIEREN VON NANOOBJEKTEN IN AEROSOLEN ZWECKS ANALYSE DAVON
DEVICE FOR SAMPLING AND TRANSPORTING NANO-OBJECTS CONTAINED IN AEROSOLS FOR THE ANALYSIS THEREOF

(30) Priorité: 05.10.2011 FR 1158997
(43) Date de publication de la demande: 13.08.2014
(73) Titulaire: Commissariat à l'Énergie Atomique et aux Énergies Alternatives, 75015 Paris (FR); Nanobadge, 01960 Peronnas (FR)
(72) Inventeur: CLAVAGUERA, Simon, F-66200 Alenya (FR); DECOLIN, Eric, F-38330 Montbonnot Saint Martin (FR); HEBERT, Guillaume, F-38700 La Tronche (FR); RECHATIN, Jean-Loup, F-38700 Corenc (FR); TARDIF, François, F-38250 Lans En Vercors (FR)
(74) Mandataire: Ahner, Philippe
(86) Numéro de dépôt international: PCT/EP2012/069774
(87) Numéro de publication internationale: WO 2013/050561

(56) Documents cités:
- EP-A1- 2 112 528
- DE-A1- 3 126 850
- US-A- 3 966 439
- US-A- 4 961 916
- US-A- 5 205 155
- US-A1- 2009 272 202
- US-B1- 7 651 543

## Description

### DOMAINE TECHNIQUE

L'invention concerne un dispositif de prélèvement et de transport de nano-objets contenus dans des aérosols en vue de leur analyse.

Plus particulièrement, l'invention s'applique au prélèvement et de transport de nanoparticules ou de nano-objets contenus dans des aérosols.

Par nano-objets, on entend des objets dont au moins une dimension unitaire est inférieure à 100 nm environ.

Par nanoparticule, on entend des particules généralement (mais pas uniquement) sphériques dont le diamètre moyen unitaire est inférieur à 100 nm environ, conformément à la norme ISO TS/27687.

L'invention peut également s'appliquer au prélèvement et au transport de particules de taille micrométrique contenues dans des aérosols.

### ART ANTÉRIEUR

L'essor rapide des nanotechnologies rend indispensable la poursuite des travaux sur les impacts sanitaires et environnementaux de ces nouveaux matériaux afin de s'entourer des conditions de sécurité optimales, en particulier pour les opérateurs (travailleurs) en poste de fabrication de nano-objets ou d'élaboration de nanomatériaux.

Depuis quelques années, les particules de taille nanométriques ont fait l'objet d'intenses recherches et leur usage a commencé à se répandre dans divers domaines tels que la santé, la microélectronique, les technologies de l'énergie ou les produits de consommation courante tels que peintures et cosmétiques.

Il est donc nécessaire de mettre au point des méthodes d'évaluation et de suivi de l'exposition aux nanoparticules des travailleurs, des consommateurs et de l'environnement. Le développement de méthodes fiables d'échantillonnage et d'analyse d'aérosols est ainsi un enjeu crucial en termes de santé publique et de prévention des risques au poste de travail. En particulier, le développement de dispositifs de prélèvement adapté pour être portatif et être fixé à l'unité à une combinaison de travail d'un travailleur en poste de fabrication de nano-objets ou d'élaboration de nanomatériaux pourrait s'avérer impératif.

La méthode de choix de prélèvement ou d'échantillonnage, c'est-à-dire actuellement privilégiée, consiste à aspirer un flux d'air susceptible d'être chargé en particules à travers un filtre qui est analysé *ex post* par diverses techniques (gravimétrique, microscopie, XRF, ...).

De l'art antérieur, il est déjà connu des dispositifs de prélèvement, aussi appelés échantillonneurs à cassette, qui sont portatifs et qui doivent échantillonner une contamination aérosol susceptible d'être inhalée par la bouche et le nez d'un individu lors de sa respiration.

Ainsi, le brevet US 4,961,916 concerne un dispositif de prélèvement de polluants gazeux et particulaires comprenant une cassette à l'intérieur de laquelle trois filtres sont empilés les uns sur les autres et comprenant deux orifices de part et d'autre de ces filtres, l'un débouchant dans l'environnement extérieur susceptible d'être pollué et l'autre sur un tuyau connecté à une pompe d'aspiration. Ainsi, d'amont en aval, lors de l'aspiration par la pompe, le premier filtre permet de ne collecter que la fraction particulaire de l'aérosol, le deuxième, préalablement imprégné d'un réactif permet de réagir sélectivement avec un ou plusieurs composés gazeux et le troisième filtre n'a qu'une fonction de rigidification de l'ensemble filtrant. Le prélèvement visé dans ce brevet est la collecte d'isocyanates gazeux et particulaires qui se trouvent dans de l'air pollué.

Le brevet US 5,205,155 divulgue quant à lui un dispositif de prélèvement de fibres d'amiantes susceptibles d'être en suspension dans l'air et s'intéresse au dépôt non uniforme sur le filtre logé dans la cassette d'échantillonnage. Le brevet, propose pour y remédier de conformer l'entrée de cassette, c'est-à-dire celle à proximité de l'orifice d'aspiration de l'environnement concerné, sous forme évasée et de la rendre lisse afin de favoriser un dépôt homogène de particules sur le filtre.

La demande de brevet US 2008/0196514 A1 concerne un dispositif de prélèvement individuel de poussières utilisé pour collecter la fraction inhalable de particules aéroportées. Ce brevet décrit différents rapports de forme de la cassette (rapports entre longueur L / et diamètre d'entrée D de l'ouverture), qui d'après lui permettent d'améliorer le prélèvement par aspiration. De plus, ce brevet mentionne que pour avoir la meilleure représentativité de l'inspiration par le nez, il est avantageux de prévoir une orientation verticale du flux d'air aspiré du bas vers le haut.

Les méthodes et dispositifs de prélèvement d'aérosols de l'état de l'art présentent un ou plusieurs inconvénients majeurs que l'on peut résumer ainsi :
- la plupart des méthodes d'échantillonnage d'aérosols, impose une extraction du filtre de sa cassette *in situ.* Les dispositifs de mise en œuvre sont donc prévus pour ouvrir la cassette aisément et par n'importe quelle personne : une ouverture avec extraction intempestive peut donc se traduire par des contaminations extérieures du filtre, par une perte de matière adsorbée sur le filtre ou par une mauvaise traçabilité du filtre. Notamment, un opérateur travaillant en poste de fabrication de nano-objets ou d'élaboration de nanomatériaux peut ouvrir de manière intempestive une cassette, contaminer un filtre, en mettre un déjà utilisé....
- lors du prélèvement, il est nécessaire d'avoir la meilleure représentation de la fraction particulaire inhalée par la bouche et le nez d'un individu. Or, certaines méthodes décrites dans la littérature présentent une orientation du dispositif de prélèvement non optimale, ce qui peut rendre l'interprétation des résultats hasardeuse.

Le but général de l'invention est alors de proposer un dispositif de prélèvement et de transport de nano-objets susceptibles d'être présents dans un aérosol en vue de leur analyse élémentaire qui ne présente pas les inconvénients précités, et donc qui permette de garantir l'intégrité du prélèvement et d'assurer à coup sûr la traçabilité de celui-ci jusqu'à l'analyse proprement dite.

On précise que l'analyse élémentaire est une analyse permettant de déterminer quels éléments atomiques (Titane, Carbone, Nickel...) sont présents ainsi que leur pourcentage atomique dans l'échantillon. Par contre, une analyse élémentaire ne permet pas de déterminer la structure ou l'assemblage de ces éléments entre eux.

Un but particulier de l'invention est de proposer un dispositif de ce type qui soit simple de réalisation et peu coûteux.

### EXPOSÉ DE L'INVENTION

Pour ce faire, l'invention a pour objet un dispositif de prélèvement et de transport de nano-objets susceptibles d'être présents dans un aérosol en vue de leur analyse, comprenant un filtre d'échantillonnage poreux apte à piéger des nano-objets susceptibles d'être en suspension dans l'aérosol, une cassette constituée d'une première pièce et d'une deuxième pièce munies de moyens d'assemblage mutuel et de moyens de maintien du filtre, la première et deuxième pièces définissant, dans leur position assemblée une cavité dans laquelle le filtre est logé en étant maintenu, et au moins un joint d'étanchéité apte à réaliser l'étanchéité entre la cavité et l'extérieur.

Selon l'invention, les moyens d'assemblage mutuel comprennent :
- des premiers moyens de clipsage solidaires de la première pièce en position assemblée ou désassemblée de la première et deuxième pièces, ces premiers moyens de clipsage étant réalisés intégralement avec la première pièce,
- des deuxièmes moyens de clipsage solidaires de la deuxième pièce en position assemblée ou désassemblé de la première et deuxième pièces, ce deuxième moyens de clipsage étant réalisés intégralement avec le deuxième pièce, et aptes à coopérer avec les premiers moyens afin de réaliser un clipsage des deux pièces ; les premiers et deuxièmes moyens de clipsage étant configurés pour ne pas être accessibles depuis l'extérieur dans la position assemblée des pièces.

En outre, une des pièces est munie de trous débouchant chacun à la fois sur l'extérieur des pièces et sur une des zones de coopération des moyens de clipsage, les trous étant aptes à loger chacun un pion afin de réaliser le déclipsage des deux pièces par effort de poussée des pions contre les premiers ou deuxièmes moyens de clipsage.

Par l'expression « ne pas être accessibles depuis l'extérieur », on entend que les moyens de clipsage ne peuvent être physiquement atteints que par le biais des pions logés individuellement dans les trous mais ne peuvent l'être manuellement ou en utilisant un outil depuis l'espace extérieur au dispositif dans sa position assemblée.

Ainsi, grâce aux moyens de clipsage, on sécurise la cassette qui ne peut être ouverte de manière intempestive, son ouverture pour l'analyse proprement dite de l'échantillon nécessitant un outil adéquat pour séparer les deux pièces de la cassette.

Cette cassette est composée de deux parties entre lesquelles se situent un porte filtre ayant pour rôle de supporter le filtre en le maintenant tendu et plan et participer à l'étanchéité entre les parties supérieures et inférieures de la cassette. Enfin, la cassette présente dans sa partie médiane une ouverture permettant la lecture de l'identifiant du porte filtre.

Selon la présente invention, les trois composantes de la cassette sont caractérisés en ce qu'elles sont constituées de matière plastique.

En outre, comme expliqué ci-après, on prévoit selon l'invention un système d'identification du filtre simple et judicieux qui est accessible de l'extérieur de la cassette sans avoir à ouvrir cette dernière. Ce système d'identification permet une traçabilité sans faille de l'échantillonnage jusqu'à l'édition du rapport d'analyse.

Selon un mode de réalisation avantageux, les premiers moyens de clipsage sont constitués par un nombre égal à n de pattes élastiquement déformables dont l'extrémité est conformée en crochet et agencées sur la première pièce en étant distantes relativement entre elles selon une position angulaire égale à 2π divisée par le nombre n, soit 2π/n, et les deuxièmes moyens de clipsage sont constitués par un même nombre n d'évidements ou d'ergots conformés en étant complémentaires aux crochets et agencés sur la deuxième pièce en étant distants relativement entre eux selon la même position angulaire à 2n/n que les pattes. De préférence, le nombre n est compris entre 2 et 20, de préférence encore entre 2 et 4.

Les moyens de maintien du filtre comprennent avantageusement deux épaulements réalisés l'un sur une périphérie interne de la première pièce et l'autre sur une périphérie interne de la deuxième pièce et, en ce que le dispositif comprend un porte-filtre maintenu par pincement entre les deux épaulements.

Le porte-filtre est de préférence déformable par compression afin d'être écrasé par la première et deuxième pièces en position assemblée et de constituer ainsi un joint d'étanchéité unique.

Le dispositif comprend de préférence au moins un joint en élastomère en appui contre au moins l'un des épaulements.

En ce qui concerne les matériaux utilisés, les premières et deuxièmes pièces et le porte-filtre sont avantageusement à base de matière thermoplastique, de préférence en téréphtalate de polyéthylène (PET), en téréphtalate de polybuthylène (PBT), en polyméthacrylate de méthyle (PMMA), en polyamide 6 (PA6), en polyamide 66 (PA66), en polycarbonate (PC), en polypropylène (PP) ou en polyoxyméthylène Copolymère (POM-C). le(s) matériau(x) formant les pièces et/ou le portefiltre peu(ven)t contenir une charge de noir de carbone à fonction antiélectrostatique.

Les moyens d'assemblage mutuel peuvent comprendre en outre un bord annulaire sur chacune des première et deuxièmes pièces afin de réaliser en plus du clipsage, un appui surfacique mutuel entre les pièces dans leur position assemblée.

En ce qui concerne le mode de fixation du porte-filtre, on prévoit avantageusement qu'au moins l'une des pièces comprend une encoche débouchant de part en part du bord annulaire et en ce que le porte-filtre comprend une languette complémentaire à l' (aux) encoche(s) et sur laquelle est fixée un élément d'identification du filtre, de sorte que dans la position assemblée des pièces l'élément d'identification soit en contact avec l'environnement extérieur.

Par l'expression « en contact avec l'environnement extérieur», on entend que l'élément d'identification émerge dans l'espace extérieur au dispositif dans sa position assemblée.

L'élément d'identification est de préférence une puce électronique ou une étiquette d'identification par radiofréquence (RFID) ou un code-barres bidimensionnelle, du type Datamatrix®. Il peut être fixé par une technique de collage, par gravure, par surinjection ou par tampographie.

L'invention concerne aussi un outil destiné à réaliser le déclipsage des deux pièces du dispositif défini précédemment, comprenant des pions agencés distants relativement entre eux selon la même position que les trous.

L'outil peut comprendre en outre des moyens de guidage mécanique aptes à guider l'outil relativement à la pièce munie de trous pour faciliter la poussée simultanée des pions contre les premiers ou deuxièmes moyens de clipsage.

L'invention concerne enfin l'utilisation d'un dispositif défini précédemment en tant que dispositif de suivi d'exposition d'opérateurs en poste de fabrication de nano-objets ou d'élaboration de nanomatériaux.

### BRÈVE DESCRIPTION DES DESSINS

D'autres caractéristiques et avantages de l'invention ressortiront mieux à la lecture de la description détaillée de l'invention, faite à titre illustratif et non limitatif en référence aux figures suivantes parmi lesquelles :
- la figure 1 est une vue de profil de la cassette de prélèvement d'un dispositif selon l'invention, la cassette étant en configuration fermée,
- la figure 2 est une vue en perspective éclatée du dispositif selon la figure 1 montrant les deux pièces de la cassette en position non assemblée et le filtre avec son porte-filtre,
- la figure 3 est une vue identique à la figure 2 montrant en outre un outil conforme à l'invention permettant l'ouverture sécurisée de la cassette,
- les figures 4 et 5 sont des vues en perspective éclatée montrant des variantes de réalisation d'un dispositif selon l'invention.

### EXPOSÉ DÉTAILLÉ DE MODES DE RÉALISATION PARTICULIERS

Pour pouvoir réaliser un prélèvement de nano-objets susceptibles d'être contenus dans un aérosol, le dispositif selon l'invention comprend tout d'abord un filtre 30 adapté pour piéger des nano-objets susceptibles d'être en suspension dans de l'air, logé et maintenu dans une cavité formée par une cassette C en configuration fermée.

Ainsi, la méthode d'échantillonnage selon l'invention consiste à orienter la cassette fermée de telle sorte que l'air à analyser est aspiré par une pompe non représentée depuis un orifice 20 et sort par l'orifice 10 pour ensuite aller vers la pompe.

L'aspiration peut bien être entendu prévue selon un trajet inverse, c'est-à-dire depuis l'orifice 10 vers l'orifice 20. Les nano-objets ou particules de taille micrométrique ainsi aspirés seront collectés sur le filtre 30 maintenu dans la cassette. On prévoit dans la méthode d'échantillonnage selon l'invention d'orienter la cassette de manière à ce que prélèvement soit le plus représentatif soit de la respiration par la bouche soit de celle par le nez. Ainsi, de préférence, pour simuler une respiration par le nez, on oriente la cassette de sorte à ce qu'elle soit verticale avec l'orifice d'aspiration 20 en bas et que l'on est ainsi une aspiration du bas vers le haut. De même, de préférence pour simuler une respiration par la bouche, on oriente la cassette pour avoir l'orifice d'aspiration 20 à l'horizontal.

Tel que représenté, le dispositif selon l'invention permet un prélèvement d'échantillon et le transport des nano-objets piégés, de manière sécurisée et avec une parfaite traçabilité.

Pour ce faire, la cassette est constituée de deux pièces 1, 2 de forme générale cylindrique.

La pièce supérieure 2 est munie de pattes flexibles 21 ou autrement dit élastiquement déformables dont l'extrémité est conformée en crochet 210.

La pièce inférieure 1 est munie d'évidements 11 complémentaire individuellement à une patte 21 avec une extrémité également en évidement ou excroissance complémentaire individuellement avec un crochet 210. On peut bien entendu dans le cadre de l'invention prévoir un agencement des crochets ou excroissance complémentaire inversé, c'est-à-dire avec des crochets individuellement dans un évidement de la pièce 1 et des pattes avec excroissance sur la pièce 2.

L'agencement angulaire relatif entre pattes flexibles 21 de la pièce supérieure 2 est identique à celui des évidements 11 de la pièce inférieure 1.

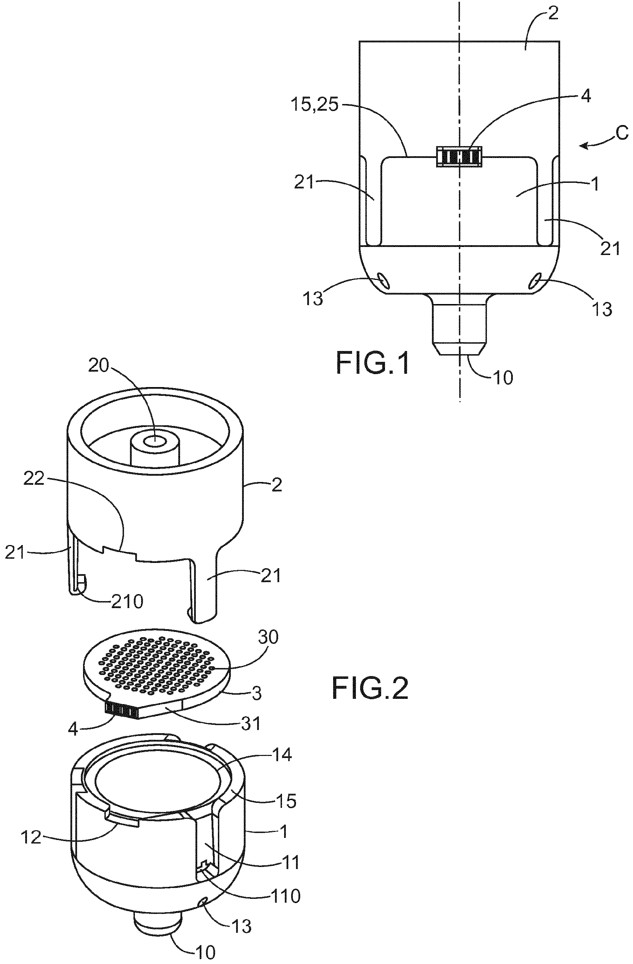

Ainsi, en position assemblée mutuelle, les pattes 21, avec leurs crochets 210 viennent s'encastrer et se clipser précisément dans les évidements 11 et évidements ou excroissances 110 (figure 1). Dans cette position assemblée mutuelle, aucune patte 21 ne fait saillie des pièces 1, 2 : autrement dit, aucun moyen de clipsage 11, 110, 21, 210 n'est accessible depuis l'extérieur et seul l'utilisation d'un outil adéquat 5 comme décrit ci-après permet la désolidarisation des deux pièces. Grâce à l'invention, on empêche toute ouverture intempestive de la cassette en dehors du laboratoire d'analyse prévu pour analyser précisément les particules piégées par le filtre 3. On limite ainsi les risques de contamination de ce dernier non représentatifs réellement de l'échantillonnage qui pourraient intervenir soit par augmentation de la quantité de particules piégées par le filtre, soit par diminution de la quantité de particules piégées sur le filtre (grattage) soit par ajout de particules de nature différente à celles échantillonnées.

La pièce inférieure 21 est munie de trous 13 débouchant à la fois à l'extérieur et sur la zone où sont agencés les excroissances ou évidements 110, c'est-à-dire au niveau de la zone où les pattes 21 avec leurs crochets 210 coopérant par clipsage sur les excroissances ou évidements 210 correspondants. Il y a donc autant de trous 13 que de moyens de clipsage complémentaires.

Pour réaliser le déclipsage des deux pièces 1, 2, on insère dans chaque trou un pion 50 de longueur suffisante pour atteindre l'excroissance 110 ou le crochet 210 en position clipsée. Ainsi, un effort de poussée sur les pions 50 logés dans les trous 13 vient décrocher les crochets 210 de leur excroissance correspondante, ce qui désolidarises les deux pièces 1, 2.

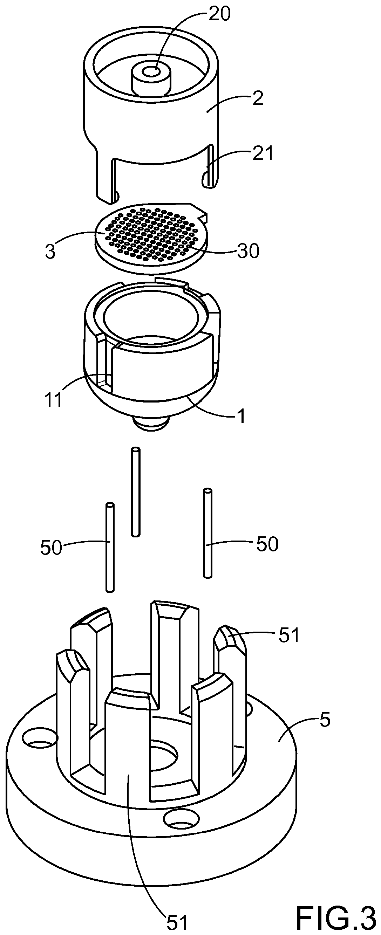

Avantageusement, tous les pions 50 sont fixés sur un outil 5 représenté en figure 3 qui comprend également des pattes rigides 51 distantes entre elles de telle sorte à pouvoir loger le corps cylindrique de la pièce inférieure 1. Autrement dit, ces pattes rigides 51 servent de guidage pour faciliter la poussée simultanée des pions 50 contre les crochets 210.

Alternativement, les pattes peuvent être situées sur la pièce inférieure et les trous sur la pièce supérieure, sans sortir du cadre de l'invention.

Le filtre 30 est quant à lui supporté par un porte filtre 3. En position assemblée des deux pièces, le porte-filtre 3 est maintenu pincé entre les deux épaulements 14, 24 réalisés chacun sur une périphérie interne d'une des deux pièces 1, 2.

Avantageusement, le porte-filtre 3 est choisi en un matériau déformable élastiquement et présente alors une fonction supplémentaire de joint d'étanchéité entre les pièces inférieure 1 et supérieure 2 de la cassette C. Autrement dit, on peut prévoir avantageusement un porte filtre 3 à dureté plus faible que les matériaux des pièces 1 et 2 de la cassette, afin de s'écraser contre les épaulements 14, 24 en regard, par pression lors du clipsage. Le porte-filtre 3 ayant pour fonction d'être un support mécanique au filtre 30, il peut être de conformation globalement annulaire ou bien fait d'une pièce massive parcourue d'une multitude de trous débouchant via des canaux droits dans l'épaisseur de la pièce, cette multitude de trous formant alors le filtre en lui-même. On veille de toute façon à ce qu'il génère un minimum de pertes de charge au niveau de l'aspiration.

Le filtre peut être constitué de membranes en alumine ; en fibres de silice, quartz ou borosilicate ; en cellulose ou ses dérivés tel que la méthylcellulose (mce) ; en polyfluorure de vinylidène (pvdf) ; en polyestersulfone (pes) ; en polystyrène (ps) ; en polytetrafluoroethylene (ptfe). Généralement il est épais de quelques micromètres à quelques dizaines de micromètres, par exemple 10 à 200 micromètres. Typiquement, les pores du filtre sont de taille unitaire comprise entre 5 et 30 µm.

On peut prévoir avantageusement, conformément à l'invention, de munir le porte-filtre d'une languette 31 complémentaires avec des encoches 12, 22 réalisées chacune sur une des deux pièces, de sorte que dans leur position assemblée, l'extrémité de la languette 31 soit en contact avec l'environnement extérieur (figure 1). Ainsi, en réalisant un élément d'identification 4 sur la languette 31, on peut réaliser une traçabilité simple et efficace sans qu'il y ait lieu d'ouvrir la cassette C. Cette traçabilité possible durant toute la durée de vie du filtre 30 permet entre autres d'associer l'échantillonnage d'un aérosol donné qui a lieu à proximité d'un poste de travail particulier à un rapport d'analyse du filtre même s'il s'écoule quelques jours entre l'échantillonnage et l'analyse proprement dite. On évite en outre tout échange malencontreux de filtres qui pourrait se produire par manipulation d'un travailleur en poste de fabrication de nano-objets ou d'élaboration de nanomatériaux et induirait en conséquence une mauvaise assignation travailleur-filtre échantillonné. Autrement dit, on évite ainsi un mauvais suivi de l'exposition d'un travailleur donné à son poste de travail. Cette rupture de la traçabilité compromettrait le suivi de l'exposition des travailleurs aux nanomatériaux. Ainsi, tel que montré en figure 1, l'élément d'identification 4 reste visible ou accessible même lorsque la cassette est fermée du fait des deux encoches 12, 22. L'élément d'identification 4 associé au porte filtre 3 peut être réalisé de différentes manières : il peut s'agir d'une étiquette avec code alphanumérique. Il peut aussi s'agir d'un code 2D de type DataMatrix®. Il peut également s'agir d'une connexion filaire à une puce incrustée dans le porte filtre 3. Ainsi, l'élément d'identification 4 contenant les informations relatives au filtre 30 et à son support 3 est intégrée au sein porte-filtre soit par une technique dite de surinjection, soit par une technique de tampographie, soit par collage, soit par une technique de gravure.

Par le terme sur-injection, on entend une technique qui permet d'intégrer l'élément d'identification 4 au sein de la languette 31 du porte filtre 3 lors de sa fabrication. L'étiquette d'identification 4 est déposée à l'intérieur d'un outillage de moulage entre partie fixe et partie mobile du moule. Lors de la fermeture du moule, l'étiquette 4 vient se plaquer contre le porte-filtre 3 par aspiration, sans produit de collage ou d'enduction. De cette manière, l'étiquette 4 épouse parfaitement l'emplacement prévu dans le moule et elle ne peut pas être arrachée du porte-filtre 3.

Par le terme collage, on entend tout procédé d'assemblage physique ou chimique qui permet via une colle ou un adhésif d'assembler le matériau de un élément d'identification 4 et le porte filtre 3.

Par le terme tampographie, on entend tout procédé d'impression indirecte (transfert d'encre) qui permet de rapporter un élément d'identification 4 directement sur le porte filtre 3.

Par le terme gravure, on entend tout procédé qui permet de creuser le porte filtre 3 (marquage laser, micro percussion) et donc de créer un élément d'identification 4.

Selon l'invention, on peut également prévoir une mise en place de l'élément d'identification 4 qui découle d'une combinaison des techniques précédemment mentionnées.

Afin d'avoir un dispositif léger et simple de mise en œuvre, on peut réaliser les deux pièces de la cassette 1, 2 et le porte-filtre 3 par injection à base de matière thermoplastique, de préférence en téréphtalate de polyéthylène (PET), en téréphtalate de polybuthylène (PBT), en polyméthacrylate de méthyle (PMMA), en polyamide 6 (PA6), en polyamide 66 (PA66), en polycarbonate (PC), en polypropylène (PP) ou en polyoxyméthylène Copolymère (POM-C). Les matières pourront être éventuellement chargées (par exemple en fibre de verre ou en fibres de carbone) et des additifs pourront éventuellement être utilisés pour améliorer les caractéristiques intrinsèques de la matière sélectionnée. Parmi ces additifs, on peut envisager des composés apportant des propriétés antistatiques. On peut également envisager de réaliser les pièces 1, 2 et 3 par usinage d'un bloc en matière thermoplastique.

Avec des matières thermoplastiques, on peut ainsi réaliser le dispositif selon l'invention à peu de coût pour le rendre jetable. On peut aussi envisager d'effectuer, une fois l'analyse d'échantillonnage faite, un nettoyage approprié de la cassette pour la réutiliser et ainsi effectuer un recyclage des pièces 1, 2.

Pour améliorer encore l'assemblage mutuel entre les deux pièces 1 et 2, on peut prévoir sur chacune d'entre elles un bord annulaire 15, 25 afin de réaliser en plus du clipsage, un appui surfacique mutuel entre les pièces dans leur position assemblée (figure 1).

Préalablement à tout échantillonnage, la cassette doit comporter un filtre positionné convenablement en son sein. Cette dernière comporte donc le filtre 30, reposant sur un support 3 lequel est maintenu entre les pièces complémentaires 1 et 2. La cassette, une fois fermée permet le passage d'un flux gazeux depuis l'orifice d'entrée 20 vers la pompe connectée à l'orifice de sortie 10 et ce, à travers le filtre 30. Des joints toriques situés de part et d'autre du porte-filtre 3 garantissent que l'écoulement du flux s'effectue à travers le filtre et qu'il n'y a aucune fuite. D'ailleurs, des mesures de débit ont été effectuées ponctuellement au niveau respectivement de l'orifice d'entrée 20 et de celui de sortie 10 : les valeurs obtenues sont identiques lorsque la pompe en fonctionnement est connectée à la cassette.

Lorsque la cassette n'est pas reliée à une pompe, il est nécessaire d'obturer les orifices 10 et 20 à l'aide de bouchons adéquats afin d'éviter des contaminations accidentelles. En revanche, lorsque cette dernière est reliée à une pompe par l'orifice 10 il est nécessaire de maintenir l'orifice 20 ouvert. Les inventeurs ont constaté qu'un fonctionnement optimal de cette cassette d'échantillonnage est obtenu pour des débits d'air allant de 0.1 à 5 L.min⁻¹. Avantageusement, le débit utilisé est compris entre 1 et 2 L.min⁻¹.

Il va de soi que d'autres améliorations ou variantes peuvent être apportées sans sortir pour autant du cadre de l'invention.

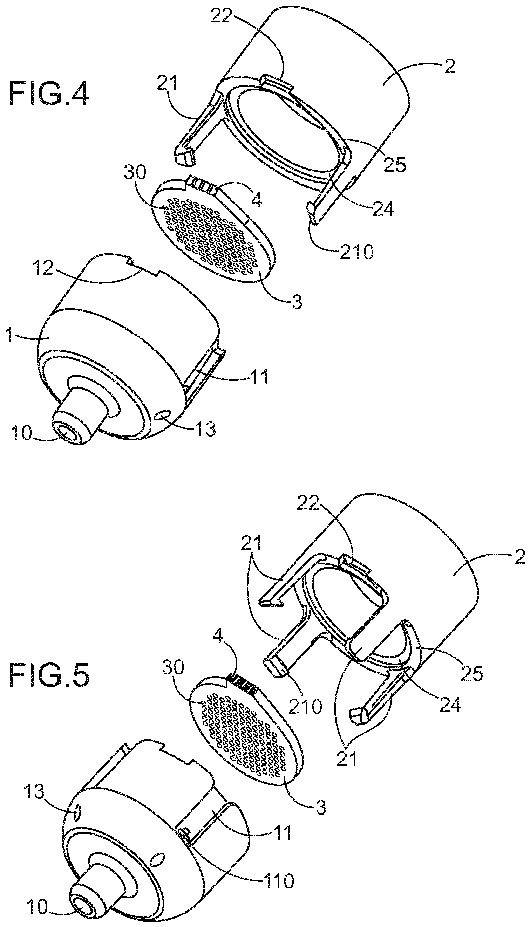

Ainsi, par exemple, dans la variante illustrée en figures 1 à 3, le nombre de pattes flexibles 21 avec crochet 210 coopérant avec les évidements 110 est égal à trois, leur positionnement angulaire relatif étant de 120° l'une de l'autre. En figure 4, on a représenté une autre variante à deux pattes flexibles 21 à 180° l'une de l'autre et en figure 5, encore une autre variante à 90° l'une de l'autre. De manière plus générale, la sécurisation mécanique de l'ouverture de la cassette peut être obtenue grâce à un nombre égal n moyens de clipsage, de type mâle, solidaires d'une des pièces 1, 2 et agencées selon une position angulaire à 2π/n les uns des autres et avec le même nombre de n de moyens de clipsage de type femelle sur l'autre pièce. On définit alors un outil 5 de déclipsage avec un nombre n correspondant de pions 50 pour pouvoir désolidariser les deux pièces 1, 2 de la cassette.

Dans le dispositif selon l'invention, les moyens de clipsage sont réalisés intégralement avec les pièces 1, 2 de la cassette; dans un exemple ne faisant pas partie de l'invention, on peut prévoir une fixation par collage, vissage ou autre...

En outre, on peut prévoir des joints d'étanchéité supplémentaires, de préférence deux joints élastomère rapportés et collés sur les pièces 1 et 2 à leur interface.

## Revendications

1. Dispositif de prélèvement et de transport de nano-objets susceptibles d'être présents dans un aérosol en vue de leur analyse, comprenant un filtre (30) d'échantillonnage poreux apte à piéger des nano-objets susceptibles d'être en suspension dans l'aérosol, une cassette constituée d'une première pièce (1) et d'une deuxième pièce (2) munies de moyens d'assemblage mutuel (11, 110 ; 21, 210) et de moyens de maintien (14, 24) du filtre, la première et deuxième pièces définissant, dans leur position assemblée une cavité dans laquelle le filtre est logé en étant maintenu, et au moins un joint d'étanchéité apte à réaliser l'étanchéité entre la cavité et l'extérieur, les moyens d'assemblage mutuel comprennent :
- des premiers moyens de clipsage (11, 110) solidaires de la première pièce en position assemblée ou désassemblée de la première et deuxième pièces, ces premiers moyens de clipsage étant réalisés intégralement avec la première pièce,
- des deuxièmes moyens de clipsage (21, 210) solidaires de la deuxième pièce en position assemblée ou désassemblée de la première et deuxième pièces, ces deuxièmes moyens de clipsage étant réalisés intégralement avec la deuxième pièce, et aptes à coopérer avec les premiers moyens afin de réaliser un clipsage des deux pièces ; les premiers et deuxièmes moyens de clipsage étant configurés pour ne pas être accessibles depuis l'extérieur dans la position assemblée des pièces, et une des pièces étant munie de trous (13) débouchant chacun à la fois sur l'extérieur des pièces et sur une des zones de coopération des moyens de clipsage, les trous étant aptes à loger chacun un pion afin de réaliser le déclipsage des deux pièces par effort de poussée des pions (50) contre les premiers ou deuxièmes moyens de clipsage.

2. Dispositif selon la revendication 1, où les premiers moyens de clipsage sont constitués par un nombre égal à n de pattes élastiquement déformables dont l'extrémité est conformée en crochet et agencées sur la première pièce en étant distantes relativement entre elles selon une position angulaire égale à 2n divisée par le nombre n, soit 2n/n, et en ce que les deuxièmes moyens de clipsage sont constitués par un même nombre n d'évidements ou d'ergots conformés en étant complémentaires aux crochets et agencés sur la deuxième pièce en étant distants relativement entre eux selon la même position angulaire à 2n/n que les pattes.

3. Dispositif selon la revendication 1 ou où les moyens de maintien du filtre comprennent deux épaulements (14, 24) réalisés l'un sur une périphérie interne de la première pièce et l'autre sur une périphérie interne de la deuxième pièce et, en ce que le dispositif comprend un porte-filtre (3) maintenu par pincement entre les deux épaulements.

4. Dispositif selon la revendication 3, où le porte-filtre est déformable par compression afin d'être écrasé par la première et deuxième pièces en position assemblée et de constituer ainsi un joint d'étanchéité unique.

5. Dispositif selon la revendication 3, comprenant au moins un joint en élastomère en appui contre au moins l'un des épaulements.

6. Dispositif selon l'une des revendications 3 à 5, où les premières et deuxièmes pièces et le porte-filtre sont à base de matière thermoplastique, de préférence en téréphtalate de polyéthylène (PET), en téréphtalate de polybuthylène (PBT), en polyméthacrylate de méthyle (PMMA), en polyamide 6 (PA6), en polyamide 66 (PA66), en polycarbonate (PC), en polypropylène (PP) ou en polyoxyméthylène Copolymère (POM-C).

7. Dispositif selon l'une des revendications précédentes, où les moyens d'assemblage mutuel comprennent en outre un bord annulaire (15, 25) sur chacune des première et deuxièmes pièces afin de réaliser en plus du clipsage, un appui surfacique mutuel entre les pièces dans leur position assemblée.

8. Dispositif selon la revendication 7, où au moins l'une des pièces comprend une encoche (12, 22) débouchant de part en part du bord annulaire et en ce que le porte-filtre (3) comprend une languette (31) complémentaire à l' (aux) encoche(s) et sur laquelle est fixée un élément d'identification (4) du filtre, de sorte que dans la position assemblée des pièces l'élément d'identification soit en contact avec l'environnement extérieur.

9. Dispositif selon la revendication 8, où l'élément d'identification est une puce électronique ou une étiquette d'identification par radiofréquence (RFID) ou un code-barres bidimensionnelle.

10. Dispositif selon la revendication 8 ou 9, où l'élément d'identification est fixé par une technique de collage, par gravure, par surinjection ou par tampographie.

11. Outil (5) destiné à réaliser le déclipsage des deux pièces du dispositif selon l'une des revendications 1 à 10, comprenant des pions (50) agencés distants relativement entre eux selon la même position que les trous (13).

12. Outil selon la revendication 11, comprenant en outre des moyens de guidage mécanique (51) aptes à guider l'outil relativement à la pièce munie de trous pour faciliter la poussée simultanée des pions (50) contre les premiers ou deuxièmes moyens de clipsage.

13. Utilisation d'un dispositif selon l'une quelconque des revendications 1 à 10 en tant que dispositif de suivi d'exposition d'opérateurs en poste de fabrication de nano-objets ou d'élaboration de nanomatériaux.

## Patentansprüche

1. Vorrichtung zur Entnahme und zum Transport von Nanoobjekten, die in einem Aerosol vorhanden sein können, im Hinblick auf ihre Analyse, umfassend einen porösen Probennahmefilter (30), der dazu ausgelegt ist, Nanoobjekte einzufangen, die in Suspension in dem Aerosol vorhanden sein können, eine Kassette, gebildet durch ein erstes Teil (1) und ein zweites Teil (2), die mit Mitteln zum wechselseitigen Zusammenbau (11, 110; 21, 210) und mit Mitteln (14, 24) zum Halten des Filters ausgestattet sind, wobei das erste und das zweite Teil in ihrer zusammengebauten Position einen Hohlraum definieren, in dem der Filter aufgenommen ist und gehalten wird, und wenigstens eine Dichtung, die dazu ausgelegt ist, die Dichtigkeit zwischen dem Hohlraum und der Außenumgebung zu realisieren,
wobei die Mittel zum wechselseitigen Zusammenbau umfassen:
- erste Verklipsungsmittel (11, 110), die mit dem ersten Teil in der zusammengebauten oder auseinandergebauten Position des ersten und des zweiten Teils verbunden sind, wobei diese ersten Verklipsungsmittel integral mit dem ersten Teil realisiert sind,
- zweite Verklipsungsmittel (21, 210), die mit dem zweiten Teil in der zusammengebauten oder auseinandergebauten Position des ersten und des zweiten Teils verbunden sind, wobei diese zweiten Verklipsungsmittel integral mit dem zweiten Teil realisiert sind und dazu ausgelegt sind, mit den ersten Mitteln zu kooperieren, um eine Verklipsung der zwei Teile zu realisieren; wobei die ersten und die zweiten Verklipsungsmittel dazu konfiguriert sind, in der zusammengebauten Position der Teile nicht von außen zugänglich zu sein,
und wobei eines der Teile mit Löchern (13) versehen ist, die jeweils sowohl auf die Außenumgebung der Teile als auch auf eine der Kooperationszonen der Verklipsungsmittel münden, wobei die Löcher dazu ausgelegt sind, jeweils einen Zapfen aufzunehmen, um die Entklipsung der zwei Teile durch eine Drückkraft der Zapfen (50) gegen die ersten oder die zweiten Verklipsungsmittel zu realisieren.

2. Vorrichtung nach Anspruch 1, wobei die ersten Verklipsungsmittel gebildet sind durch eine Zahl gleich n von elastisch verformbaren Laschen, deren Ende hakenförmig gebildet ist und die an dem ersten Teil angeordnet sind, wobei sie relativ zueinander entlang einer Winkelposition gleich 2π geteilt durch die Zahl n, entsprechend 2π/n beabstandet sind, und wobei die zweiten Verklipsungsmittel gebildet sind durch eine gleiche Zahl n von Aussparungen oder von Noppen, die komplementär zu den Haken gebildet sind und an dem zweiten Teil angeordnet sind, wobei sie relativ zueinander entlang der gleichen Winkelposition bei 2π/n wie die Laschen beabstandet sind.

3. Vorrichtung nach Anspruch 1 oder 2, wobei die Mittel zum Halten des Filters zwei Schultern (14, 24) umfassen, von denen die eine an einem Innenumfang des ersten Teils und die andere an einem Innenumfang des zweiten Teils realisiert ist, und wobei die Vorrichtung einen Filterträger (3) umfasst, der durch Klemmung zwischen den zwei Schultern gehalten ist.

4. Vorrichtung nach Anspruch 3, wobei der Filterträger mittels Kompression verformbar ist, um durch das erste und das zweite Teil in der zusammengebauten Position gequetscht zu werden und somit eine einzige Dichtung zu bilden.

5. Vorrichtung nach Anspruch 3, umfassend wenigstens einen Verbinder aus Elastomer in Anlage gegen wenigstens eine der Schultern.

6. Vorrichtung nach einem der Anspruch 3 bis 5, wobei das erste und das zweite Teil und der Filterträger auf Basis von thermoplastischem Material sind, vorzugsweise aus Polyethylenterephtalat (PET), aus Polybuthylenterephtalat (PBT), aus Polymethylmethacrylat (PMMA), aus Polyamid 6 (PA6), aus Polyamid 66 (PA66), aus Polycarbonat (PC), aus Polypropylen (PP) oder aus Polyoxymethylen-Copolymer (POM-C).

7. Vorrichtung nach einem der vorhergehenden Ansprüche, wobei die Mittel zum wechselseitigen Zusammenbau ferner einen ringförmigen Rand (15, 25) an jedem von dem ersten und dem zweiten Teil umfassen, um zusätzlich zu der Verklipsung eine wechselseitige Oberflächenanlage zwischen den Teilen in ihrer zusammengebauten Position zu realisieren.

8. Vorrichtung nach Anspruch 7, wobei wenigstens eines der Teile eine Einkerbung (12, 22) umfasst, die auf beiden Seiten des ringförmigen Rands mündet, und wobei der Filterträger (3) eine Zunge (31) umfasst, die komplementär zu der/den Einkerbung(en) ist, und an der ein Element (4) zur Identifikation des Filters befestigt ist, derart, dass in der zusammengebauten Position der Teile das Identifikationselement in Kontakt mit der äußeren Umgebung ist.

9. Vorrichtung nach Anspruch 8, wobei das Identifikationselement ein elektronischer Chip oder ein Etikett zur Identifikation mittels Funkfrequenz (RFID) oder ein zweidimensionaler Streifencode ist.

10. Vorrichtung nach Anspruch 8 oder 9, wobei das Identifikationselement durch eine Verklebungstechnik befestigt ist, durch Ätzen, durch Hinterspritzen oder durch Tampondruck.

11. Werkzeug (5) zur Realisierung der Entklipsung der zwei Teile der Vorrichtung nach einem der Ansprüche 1 bis 10, umfassend Zapfen (50), die relativ zueinander entlang der gleichen Position wie die Löcher (13) beabstandet angeordnet sind.

12. Werkzeug nach Anspruch 11, ferner umfassend mechanische Führungsmittel (51), die dazu ausgelegt sind, das Werkzeug relativ zu dem mit Löchern versehenen Teil zu führen, um das gleichzeitige Drücken der Zapfen (50) gegen die ersten oder die zweiten Verklipsungsmittel zu erleichtern.

13. Verwendung einer Vorrichtung nach einem der Ansprüche 1 bis 10 als Vorrichtung zum Verfolgen der Exposition von Bedienern im Einsatz bei der Fabrikation von Nanoobjekten oder bei der Bearbeitung von Nanomaterialien.

## Claims

1. A device for sampling and transporting nano-objects likely to be present in an aerosol for the analysis thereof, comprising a porous sampling filter (30) capable of trapping nano-objects likely to be suspended in the aerosol, a cassette consisting of a first part (1) and a second part (2) provided with mutual assembly means (11, 110; 21, 210) and filter holding means (14, 24), the first and second parts defining, in their assembled position, a cavity wherein the filter is accommodated by being held, and at least one seal capable of sealing between the cavity and outside,
the mutual assembly means comprising:
- first clipping means (11, 110) secured to the first part in an assembled or disassembled position of the first and second parts, said first clipping means being integral with the first part,
- second clipping means (21, 210) secured to the second part in an assembled or disassembled position of the first and second parts, said second clipping means being integral with the second part and capable of cooperating with the first means for clipping both parts; the first and second clipping means being configured not to be accessible from outside in the assembled position of the parts,
and one of the parts being provided with holes (13) opening each at a time onto outside of the parts and on one of the cooperation zones of the clipping means, the holes being each capable of accommodating a pin for unclipping both parts by applying a thrust force on the pins (50) against the first or second clipping means.

2. Device according to claim 1, wherein the first clipping means consist of an number equal to n elastically deformable tabs which end is shaped as a hook and arranged on the first part by being relatively distant from each other at an angular position equal to 2π divided by the number n, that is 2π/n, and in that the second clipping means consist of a same number n of recesses or lugs shaped by being complementary to the hooks and arranged on the second part by being relatively distant from each other at the same angular position at 2π/n as the tabs.

3. Device according to claim 1 or 2, wherein the filter holding means comprise two shoulders (14, 24) one made on an inner periphery of the first part and the other on an inner periphery of the second part, and in that the device comprises a filter holder (3) pinchedly held between both shoulders.

4. Device according to claim 3, wherein the filter holder is compressively deformable in order to be crushed by the first and second parts in the assembled position and thus making up a single seal.

5. Device according to claim 3, comprising at least one elastomeric seal pressing against at least one of the shoulders.

6. Device according to one of claims 3 to 5, wherein the first and second parts and the filter holder are based on thermoplastic material, preferably of polyethylene terephthalate (PET), polybutylene terephthalate (PBT), polymethylmethacrylate (PMMA), polyamide 6 (PA6), polyamide 66 (PA66), polycarbonate (PC), polypropylene (PP) or polyoxymethylene copolymer (POM-C).

7. Device according to one of the preceding claims, wherein the mutual assembly means further comprise an annular edge (15, 25) on each of the first and second parts in order to perform, in addition to clipping, mutual surface pressing between the parts in their assembled position.

8. Device according to claim 7, wherein at least one of the parts comprises a notch (12, 22) opening on either side of the annular edge and in that the filter holder (3) comprises a tongue (31) complementary to the notch(es) and on which a filter identifying element (4) is attached, such that in the assembled position of the parts, the identifying element is in contact with the outside environment.

9. Device according to claim 8, wherein the identifying element is an electronic chip or a radiofrequency identification (RFID) tag or a two dimensional bar code.

10. Device according to claim 8 or 9, wherein the identifying element is attached by a bonding technique, through etching, overinjection or tampography.

11. Tool (5) for performing the unclipping of both parts of the device according to one of claims 1 to 10, comprising pins (50) arranged relatively distant from each other at the same position as the holes (13).

12. Tool according to claim 11, further comprising mechanical guide means (51) capable of guiding the tool relatively to the part provided with holes to facilitate the simultaneous thrust of the pins (50) against the first or second clipping means.

13. Use of a device according to any of claims 1 to 10, as a device for tracking exposure of operators in a station for making nano-objects or developing nanomaterials.
